# EUROPÄISCHE PATENTSCHRIFT

(11) **EP 3 726 076 B1**
(45) Veröffentlichungstag und Bekanntmachung des Hinweises auf die Patenterteilung: **09.02.2022**
(21) Anmeldenummer: 20162932.6
(22) Anmeldetag: 13.03.2020
(51) Int. Cl.: F16C 11/06, F16J 3/04

(54) **DICHTUNGSBALG**
SEALING BELLOW
SOUFFLET D'ÉTANCHÉITÉ

(30) Priorität: 16.04.2019 DE 102019110034
(43) Veröffentlichungstag der Anmeldung: 21.10.2020
(73) Patentinhaber: Carl Freudenberg KG, 69469 Weinheim (DE)
(72) Erfinder: Idies, Nedal, 12105 Berlin (DE); Knorr, Rainer, 10557 Berlin (DE)

(56) Entgegenhaltungen:
- EP-A1- 1 852 617
- EP-A1- 3 076 033
- DE-A1-102016 204 292
- DE-B3-102006 039 614

## Beschreibung

### Technisches Gebiet

Die Erfindung betrifft einen Dichtungsbalg, umfassend einen Mantel aus einem gummielastischen Werkstoff, der stirnseitig beiderseits jeweils einen Randbereich aufweist, wobei in zumindest einem der Randbereiche ein Spannring zur Befestigung des Dichtungsbalgs an einem Maschinenelement angeordnet ist.

### Stand der Technik

Ein solcher Dichtungsbalg mit den Merkmalen des Oberbegriffs von Anspruch 1 ist aus der EP 3 076 033 A1 bekannt. Bei diesem Dichtungsbalg wird ein Spannring in einen der Randbereiche eingebettet. Dieser Spannring ist in Umfangsrichtung in sich geschlossen ausgebildet und weist einen starren, nicht-veränderlichen Durchmesser auf, wobei stirnseitig beiderseits des Stützrings gleichmäßig in Umfangsrichtung verteilt angeordnete Erhebungen vorgesehen sind, die einander auf Lücke zugeordnet sind.

Ein weiterer Spannring ist aus der DE 10 2006 039 614 B3 bekannt. Der Spannring ist vor seiner Montage mit einem einzuspannenden Bauteil ein offener Ring, dessen Enden eine korrelierende, verzahnungsartige Geometrie aufweisen, über die die Enden während des Spannens fortlaufend miteinander verbindbar sind. Der Spannring kann zur Abdichtung eines Dichtungsbalgs für ein Kugelgelenk eines Kraftfahrzeugs zur Anwendung gelangen.

Eine Einbettung eines Spannrings in den Randbereich eines Dichtungsbalgs, also zum Beispiel ein in den Randbereich eines Dichtungsbalgs einvulkanisierter Spannring, wird ausdrücklich als nachteilig erachtet, weil Herstellungsaufwand und Fertigungskosten jeweils hoch sind.

Aus diesem Grund umschließt der vorbekannte Spannring den Randbereich eines Dichtungsbalgs im Sinne einer Schelle außenumfangsseitig und drückt den Randbereich des Dichtungsbalgs unter elastischer Vorspannung dichtend an ein Maschinenelement, das von dem Randbereich umschlossen ist.

Der Vorteil des vorbekannten Spannrings wird darin gesehen, dass dieser keine nach außen vorstehenden Teile, zum Beispiel keine Erhebungen, aufweist um die beiden zunächst offenen Enden des Spannrings zusammenzuführen und den Spannring dadurch zu verspannen. Die Montage des zunächst offenen Spannrings erfolgt mittels eines Montagewerkzeugs, das in den Spannring integriert ist. Im Anschluss an die Montage des Spannrings umschließt dieser den vom Spannring umschlossenen Randbereich kreisringförmig.

Der Spannring kann diverse Dehnungsfugen aufweisen, die in Umfangsrichtung des Spannrings angeordnet sind, zur Verbesserung der Elastizität und zur Erzielung eines Toleranz- und Spielausgleichs. Die Dehnungsfugen erstrecken sich gut halbkreisförmig, in jedem Fall außerhalb der verzahnungsartigen Geometrie, des Spannmittels und der Montagehalterungen.

Aus der DE 10 2016 204 292 A1 ist ein weiterer Dichtungsbalg bekannt, insbesondere zur Abdichtung eines Kugelgelenks mit einem schwenkbeweglich gegenüber einem Gelenkgehäuse gelagerten Kugelzapfen, wobei der Dichtungsbalg einen gehäuseseitigen Randabschnitt, einem zapfenseitigen Randabschnitt und einen diese verbindenden Mantel umfasst. Am zapfenseitigen Randabschnitt ist ein Vorsprung zum Eingriff in eine am Kugelzapfen ausgebildete Nut ausgebildet, um in Zusammenwirkung mit dem Kugelzapfen einen Dichtbereich zu bilden, wobei am zapfenseitigen Randabschnitt wenigstens ein weiterer Vorsprung ausgebildet ist, der in Zusammenwirkung mit dem Kugelzapfen wenigstens einen weiteren Dichtbereich bildet.

Der zapfenseitige Randabschnitt ist mit einer außenumfänglich ausgebildeten Ringnut zur Aufnahme eines den Dichtungsbalg umgreifenden Spannelements versehen, wobei das Spannelement insbesondere als Flach- oder Runddraht-Spannring ausgebildet ist.

Eine Einrichtung zur Befestigung eines Dichtungsbalgs ist aus der EP 1 852 617 A1 bekannt. Die Einrichtung zur Befestigung eines Dichtungsbalgs ist mit einem radialen und einem axialen Dichtbereich an wenigstens einem seiner Enden, insbesondere am Kugelzapfen eines Kugelzapfengelenks ausgebildet, wobei das Ende von einem Spannelement eingefasst ist und wobei das Spannelement als geschlossener Spannring ausgebildet ist. Der Spannring ist mit seiner radial innenliegenden Oberfläche an die Form der ihn aufnehmenden Ringnut angepasst. Der Spannring kann als Schalenelement aus einem Blech im Biegeverfahren hergestellt sein.

Außerdem sind Dichtungsbälge allgemein bekannt, zum Beispiel aus der EP 2 054 648 B1, und können zur Abdichtung von Kugelgelenken zur Anwendung gelangen.

Kugelgelenke, insbesondere bei Verwendung in Kraftfahrzeugen, müssen gegen das Eindringen von Schmutz und Feuchtigkeit geschützt sein, um eine geringe Wartungsintensität und eine hohe Lebensdauer der Kugelgelenke zu gewährleisten. Dafür sorgen Dichtungsbälge, die der Abdichtung zweier relativ zueinander bewegbarer Maschinenelemente dienen. Die relativ zueinander bewegbaren Maschinenelemente sind im Fall von Kugelgelenken ein Kugelzapfen und ein Gehäuse, wobei der Kugelzapfen schwenkbar und drehbar im Gehäuse des Kugelgelenks gelagert ist.

Der zur Abdichtung dieser relativ zueinander bewegbaren Maschinenelemente zum Einsatz kommende Dichtungsbalg weist zwei in axialem Abstand benachbart zueinander angeordnete Randbereiche auf, die durch den Mantel miteinander verbunden sind. Einer der Randbereiche liegt dichtend am Kugelzapfen an und bildet einen Dichtbereich, während der axial gegenüberliegende andere Randbereich mit dem Gehäuse des Kugelgelenks kraft- und/oder formschlüssig verbunden ist und einen Befestigungsbereich bildet. Der Befestigungsbereich dichtet üblicherweise statisch gegenüber dem Gehäuse ab. Der Dichtbereich gleitet demgegenüber auf dem Kugelzapfen und dichtet das Kugelgelenk in allen Positionen dynamisch ab. Der Kugelzapfen dreht sich um die eigene Achse und schwenkt um den Kugelmittelpunkt.

Die in die Randbereiche integrierten Spannelemente sind gegen Korrosion, Verlust oder Beschädigung, zum Beispiel durch Steinschlag, geschützt.

Eine mögliche Beschädigung der Dichtungsbälge, die unter anderem bei der Montage externer Spannringe entstehen kann, wird durch den Einsatz von in die Randbereiche integrierten Spannringe vermieden.

Der Randbereich des vorbekannten Dichtungsbalgs, der den Befestigungsbereich bildet, umschließt einen als Spannring ausgebildeten Federring. Der Federring ist in den Befestigungsbereich einvulkanisiert. Die elastischen Eigenschaften des Federrings ermöglichen, dass der Dichtungsbalg mit seinem Befestigungsbereich über den zu dichtenden Teil eines Maschinenelements gezogen werden kann und sich anschließend an das abzudichtende Maschinenelement dichtend anlegt. Der Federring weist in radialer Richtung innen Haltekrallen auf, die in einem Winkel zu einem Axialvorsprung des Federrings angeordnet und gleichmäßig über den Umfang des Federrings verteilt sind. Die Haltekrallen sind elastisch nachgiebig am Axialvorsprung angelenkt. Der Federring ist, im Schnitt betrachtet, im Wesentlichen L-förmig ausgebildet.

Durch den Winkel, unter dem die Haltekrallen elastisch nachgiebig mit dem Axialvorsprung verbunden sind, ist eine Fixierung des Befestigungsbereichs des Dichtungsbalgs an dem abzudichtenden Maschinenelement ermöglicht. Bei dieser Art der Spannringe werden die Haltekrallen deformiert und der Axialvorsprung nach außen tordiert.

Die Dichtheit der Verbindung zwischen Befestigungsbereich des Dichtungsbalgs und abzudichtendem Maschinenelement hängt jedoch maßgeblich davon ab, ob das abzudichtende Maschinenelement von dem Befestigungsbereich konzentrisch umschlossen ist. Voraussetzung dafür ist eine gleichmäßige Anlage der Haltekrallen am Maschinenelement. Eine gleichmäßige Anlage setzt eine optimal zentrierte Zuordnung von Maschinenelement und Befestigungsbereich aneinander voraus, um eine unerwünschte Deformation des Spannrings und daraus resultierend eine unerwünschte Leckage zu vermeiden.

### Darstellung der Erfindung

Der Erfindung liegt die Aufgabe zugrunde, einen Dichtungsbalg der eingangs genannten Art derart weiterzuentwickeln, dass sich eine vereinfachte Montage des Dichtungsbalgs und eine verbesserte Abdichtung zumindest eines Randbereichs am entsprechenden Maschinenelement ergibt. Insbesondere soll sich während der Montage des zumindest einen Randbereichs am entsprechenden Maschinenelement eine selbsttätige Zentrierung ergeben.

Diese Aufgabe wird erfindungsgemäß durch einen Dichtungsbalg mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass der Spannring durch eine kreisringförmige Scheibe mit elastisch veränderlichem Durchmesser gebildet ist, die selbstzentrierend und, in Umfangsrichtung betrachtet, mäanderförmig ausgebildet ist.

Durch die mäanderförmige Ausbildung der kreisringförmigen Scheibe ist der im Randbereich des Dichtungsbalgs zur Anwendung gelangende Spannring in radialer Richtung elastisch nachgiebig und kann sich dadurch beim Aufschieben auf das abzudichtende Maschinenelement in radialer Richtung aufweiten. Der Spannring weist einen elastisch veränderlichen Durchmesser auf.

Die Montage des Randbereichs auf dem abzudichtenden Maschinenelement erfolgt durch in Umfangsrichtung gleichmäßig verteilte Radialkräfte. Dadurch verkrallt sich der Spannring in Umfangsrichtung gleichmäßig am Maschinenelement und sorgt für eine kraftschlüssige und dichte Verbindung während einer langen Gebrauchsdauer.

Spannringe aus dem Stand der Technik, die im Wesentlichen L-förmig ausgebildete sind, mit einem in sich geschlossen ausgebildeten Axialvorsprung haben demgegenüber keinen Durchmesser, der elastisch nachgiebig und damit in seiner Größe veränderlich wäre.

Gemäß einer vorteilhaften Ausgestaltung kann es vorgesehen sein, dass der Spannring ohne chemische Verbindung ausschließlich formschlüssig im jeweiligen Randbereich angeordnet ist.

Im Stand der Technik erfolgt eine Einbettung der Spannringe in die Randbereiche üblicherweise während eines Vulkanisationsprozesses derart, dass die aus einem metallischen Werkstoff bestehenden Spannringe vorab mit einem Haftvermittler beschichtet werden, der später für eine stoffschlüssige Verbindung zum gummielastischen Werkstoff der Randbereiche notwendig ist. Die Beschichtung der Spannringe mit einem Haftvermittler ist aufwendig, kostenintensiv und umweltbelastend. Um die Spannringe mit einem Haftvermittler zu beschichten, bedarf es des Einsatzes verschiedener Chemikalien und Maschinen. Abgesehen davon, dass eine solche Vorbehandlung der Spannringe mit dem Haftvermittler aufwendig und teuer ist, entstehen durch die Vorbehandlung des Spannrings mit Haftvermittler beträchtliche Mengen an verunreinigten Chemikalien, die als Sondermüll entsorgt oder in einem aufwendigen Wiederverwertungsprozess aufbereitet werden müssen.

Durch den ausschließlich formschlüssig im jeweiligen Randbereich angeordneten Spannring ist eine chemische Bindung entbehrlich. Dabei ist von hervorzuhebendem Vorteil, dass der Dichtungsbalg insgesamt einfach, kostengünstig und umweltfreundlich herstellbar ist. Zur Herstellung des Dichtungsbalgs werden nicht-vorbehandelte, insbesondere nicht mit einem Haftvermittler versehene Spannringe in ein Vulkanisationswerkzeug eingelegt, positioniert und anschließend mit dem gummielastischen Werkstoff, aus dem der Mantel und die Randbereiche bestehen, umspritzt.

Der Spannring besteht aus einem zähharten Werkstoff, insbesondere aus einem metallischen Werkstoff. Der Spannring kann zum Beispiel aus einem Federstahl bestehen. Derartige Spannringe sind in praktisch allen erforderlichen Größen einfach und kostengünstig herstellbar und deshalb auch für in Großserien hergestellte Dichtungsbälge gut geeignet.

Anstelle eines metallischen Werkstoffs können auch polymere Werkstoffe zur Anwendung gelangen.

Gemäß einer vorteilhaften Ausgestaltung kann es vorgesehen sein, dass der Spannring in radialer Richtung innenseitig erste Durchbrechungen aufweist und in radialer Richtung außenseitig zweite Durchbrechungen, dass die ersten Durchbrechungen und die zweiten Durchbrechungen jeweils einander, in Umfangsrichtung betrachtet, mit Abstand benachbart zugeordnet sind, wobei die ersten und die zweiten Durchbrechungen in einer gemeinsamen, gedachten Radialebene angeordnet sind. Durch die zuvor beschriebene Ausgestaltung weist der Spannring einen elastisch veränderlichen Durchmesser auf und zentriert sich dadurch im Wesentlichen selbsttätig am abzudichtenden Maschinenelement, zum Beispiel am Gehäuse eines Kugelgelenks für Fahrwerke, Stabilisatoren oder Lenkungen in Kraftfahrzeugen.

Der Werkstoff und die Gestalt der kreisringförmigen, mäanderförmigen Scheibe, insbesondere die Gestalt der Durchbrechungen, beeinflussen die Gebrauchseigenschaften des Spannrings, insbesondere dessen Verhalten bei radialer Aufweitung und die Radialkraft, mit der der Randbereich das abzudichtenden Maschinenelement bei montiertem Dichtungsbalg, in Umfangsrichtung betrachtet, gleichmäßig umschließt.

Die ersten Durchbrechungen begrenzen, im Umfangsrichtung betrachtet, Haltekrallen, durch die der Dichtungsbalg mit seinem entsprechenden Randbereich am Maschinenelement befestigbar ist.

Der Innenumfang der Haltekrallen kann die Oberfläche des abzudichtenden Maschinenelements beispielsweise unmittelbar anliegend berühren, weil der Innenumfang der Haltekrallen einen Bestandteil des Innenumfangs des entsprechenden Randbereichs bildet.

Nach einer anderen Ausgestaltung, nämlich dann, wenn auch der Innenumfang der Haltekrallen vom gummielastischen Werkstoff des entsprechenden Randbereichs überdeckt ist, übt die Haltekralle mittels einer Gummispur, von der sie überdeckt ist, eine Klemmkraft auf die Oberfläche des abzudichtenden Maschinenelements aus.

Die ersten Durchbrechungen sind bevorzugt im Wesentlichen Ω-förmig ausgebildet und weisen in radialer Richtung innen erste Öffnungen auf. Hierbei ist von Vorteil, dass die Radialflexibilität erhöht und die Fläche der Durchbrechung vergrößert wird. Dadurch kann der Gummi besser durch den Spannring fließen.

Die zweiten Durchbrechungen sind demgegenüber bevorzugt im Wesentlichen U-förmig ausgebildet und weisen in radialer Richtung außen zweite Öffnungen auf.

Hierbei ist von Vorteil, dass die Radialflexibilität erhöht wird und gleichzeitig noch genug Material vorhanden ist, um die Steifigkeit des Spannrings zu gewährleisten.

Wären die ersten und die zweiten Durchbrechungen gleich ausgebildet, zum Beispiel Ω-förmig oder U-förmig, wäre das zwar generell möglich, ein solcher Spannring hätte jedoch die folgenden Nachteile und damit schlechtere Gebrauchseigenschaften:
Wären die Durchbrechungen alle U-förmig, wäre die Flexibilität wahrscheinlich nicht ausreichend.
Wären die Durchbrechungen demgegenüber alle Ω-förmig, wäre der Spannring nicht stabil/steif genug.

Sowohl die Ω-förmigen als auch die U-förmigen Durchbrechungen haben jeweils den Vorteil, dass wegen des jeweils gerundeten Nutgrunds unerwünschte Kerbwirkungen im Nutgrund vermieden werden. Die Gefahr einer Beschädigung/Zerstörung des Spannrings bei seiner radialen Aufweichung während der Montage des Dichtungsbalgs ist dadurch auf ein Minimum begrenzt.

Die ersten und die zweiten Öffnungen können, in Umfangsrichtung betrachtet, im Wesentlichen dieselbe Weite aufweisen. Die ersten und die zweiten Durchbrechungen können jeweils eine im Wesentlichen gleiche radiale Tiefe aufweisen. Dadurch ergibt sich in jedem Umfangsbereich des Spannrings die gleiche elastische Nachgiebigkeit in radialer Richtung. Die Selbstzentrierung des mit dem Spannring versehenen Randbereichs auf dem abzudichtenden Maschinenelement funktioniert dadurch besonders gut.

### Kurzbeschreibung der Zeichnung

Ein Ausführungsbeispiel des erfindungsgemäßen Dichtungsbalgs wird nachfolgend anhand der Figuren 1 bis 3 näher beschrieben.

Die Figuren 1 bis 3 zeigen jeweils in schematischer Darstellung:
- Figur 1: ein Ausführungsbeispiel des Dichtungsbalgs in perspektivischer Darstellung, wobei die Spannringe zur Verdeutlichung ihrer Gestalt nur teilweise in die entsprechenden Randbereiche eingebettet dargestellt sind,
- Figur 2: einen der Spannringe, der den relativ größeren Durchmesser aufweist und im Randbereich angeordnet ist, der den Befestigungsbereich bildet,
- Figur 3: ein Ausführungsbeispiel einer Dichtungsbalg-Anordnung in der der Dichtungsbalg aus Figur 1 zur Anwendung gelangt.

### Ausführung der Erfindung

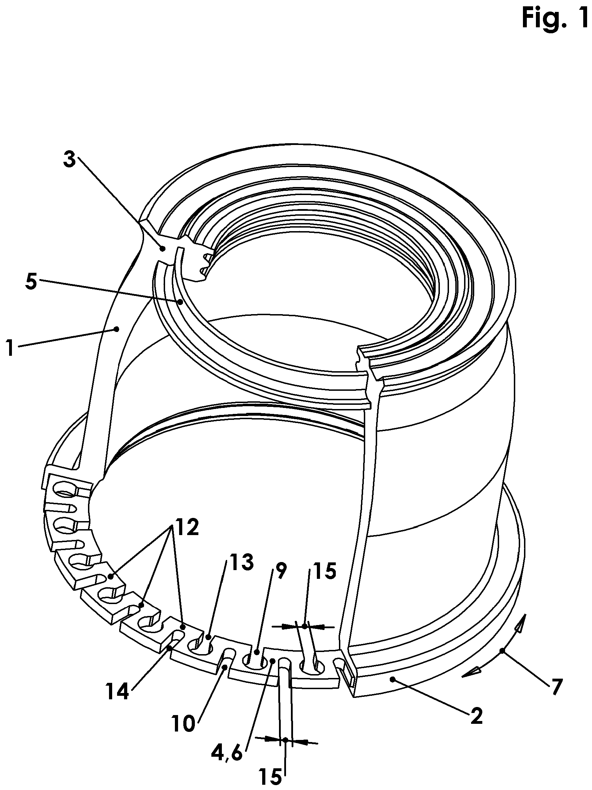

In Figur 1 ist ein erstes Ausführungsbeispiel des Dichtungsbalgs in perspektivischer Darstellung gezeigt. Um die Gestalt der zur Anwendung gelangenden Spannringe 4, 5 in den entsprechenden Randbereichen 2, 3 deutlicher darstellen zu können, sind die Spannringe 4, 5 nur teilweise vom gummielastischen Werkstoff der Randbereiche 2, 3 umschlossen dargestellt. Auch ist zur Verdeutlichung der Erfindung ein Segment aus dem Mantel 1 herausgetrennt.

Mit Ausnahme der Spannringe 4, 5 besteht der Dichtungsbalg materialeinheitlich aus einem gummielastischen Werkstoff. Der Mantel 1 weist in dem gezeigten Ausführungsbeispiel keine Falten auf; alternativ könnte der Dichtungsbalg als Faltenbalg ausgebildet sein.

Die Spannringe 4, 5 sind im gezeigten Ausführungsbeispiel in die jeweiligen Randbereiche 2, 3 integriert, wobei zumindest der Spannring 4 im jeweiligen Randbereich 2 ausschließlich formschlüssig, ohne chemische Bindung gehalten ist.

Wie zuvor beschrieben, wird die Herstellung des Dichtungsbalgs dadurch vereinfacht. Der Dichtungsbalg ist einfach und kostengünstig herstellbar, und Chemikalien, die im Anschluss an die Herstellung des Dichtungsbalgs als Sondermüll entsorgt oder einem aufwendigen Wiederverwertungsprozess zugeführt werden müssten, entstehen bei der Einbettung des Spannrings 4 in den Randbereich 2 nicht.

Die Spannringe 4, 5 bestehen im gezeigten Ausführungsbeispiel jeweils aus einem metallischen Werkstoff.

Die Spannringe 4, 5 sind voneinander abweichend gestaltet. Der Spannring 4 im Randbereich 2, der einen Befestigungsbereich des Dichtungsbalgs bildet und statisch gegenüber einem Maschinenelement abdichtet, ist als kreisringförmige Scheibe 6 ausgebildet, die, im Umfangsrichtung 7 betrachtet, mäanderförmig gestaltet ist.

Der Spannring 5 im axial gegenüberliegenden Randbereich 3 ist demgegenüber im Wesentlichen L-förmig gestaltet. Dieser Randbereich bildet den Dichtbereich, der das entsprechende Maschinenelement dynamisch dichtend umschließt.

Der Spannring 4 weist in radialer Richtung 8 innenseitig erste Durchbrechungen 9 auf, die, in Umfangsrichtung 7 betrachtet, Haltekrallen 12 begrenzen. Die ersten Durchbrechungen 9 sind im gezeigten Ausführungsbeispiel im Wesentlichen Ω-förmig ausgebildet und haben in radialer Richtung 8 innen erste Öffnungen 13.

Außerdem weist der Spannring 4 in radialer Richtung 8 außenseitig zweite Durchbrechungen 10 auf, die einander, in Umfangsrichtung 7 betrachtet, ebenso wie die ersten Durchbrechungen 9 jeweils mit Abstand benachbart zugeordnet sind.

Für die elastische Veränderlichkeit des Durchmessers des Spannrings 4 ist von entscheidender Wichtigkeit, dass dieser kreisring- und mäanderförmig ausgebildet ist, wobei die ersten 9 und die zweiten Durchbrechungen 10 in der gemeinsamen, gedachten Radialebene 11 angeordnet sind.

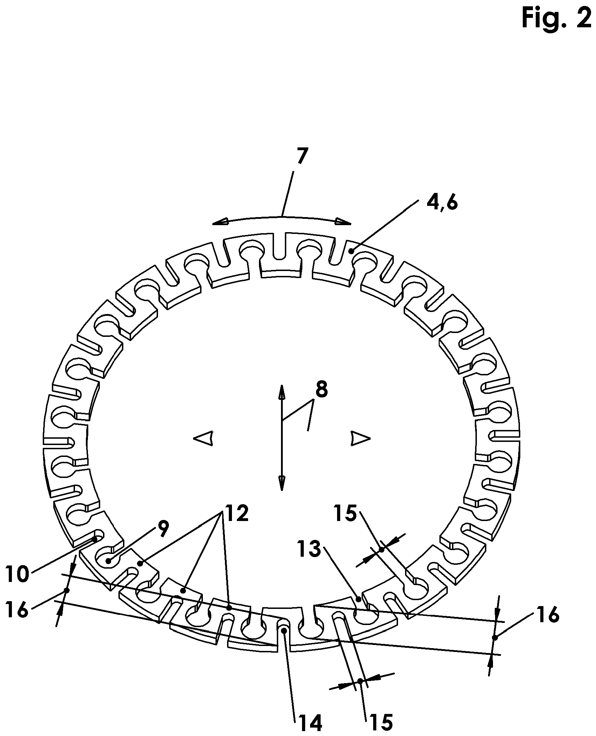

In Figur 2 ist der Spannring 4 aus Figur 1 als Einzelteil in seiner herstellungsbedingten Form gezeigt.

Während der Montage des Dichtungsbalgs auf das abzudichtende Maschinenelement wird der Befestigungsbereich des Dichtungsbalgs in radialer Richtung 8 elastisch aufgeweitet, was durch die mäanderförmige Gestalt des Spannrings 4 problemlos möglich ist.

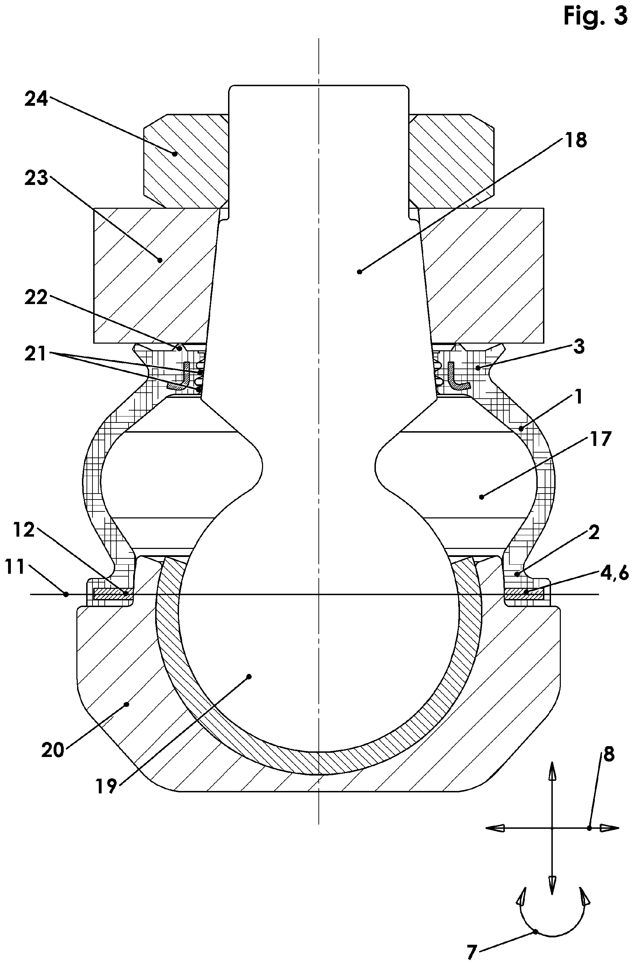

In Figur 3 ist der erfindungsgemäße Dichtungsbalg aus Figur 1 während seiner bestimmungsgemäßen Verwendung im eingebauten Zustand gezeigt. Die Dichtungsbalg-Anordnung umfasst ein Kugelgelenk 17 mit einem Kugelzapfen 18, dessen Gelenkkugel 19 innerhalb eines Gehäuses 20 drehbeweglich und schwenkbar gelagert ist. Durch das Spannelement 4 im Randbereich 3 ist der Dichtungsbalg statisch dichtend am Gehäuse 20 befestigt.

Stirnseitig andererseits umschließt der Randbereich 3 den Kugelzapfen 18 des Kugelgelenks 17, wobei der Randbereich 3 radial innenseitig den Kugelzapfen 18 mit Dichtlippen 21 dichtend umschließt. Stirnseitig, auf der dem Randbereich 4 axial abgewandten Seite des Randbereichs 3, ist eine Axialdichtlippe 22 angeordnet, die ein Hebelauge 23 des Kugelgelenks 17 dichtend berührt. Die Dichtlippen 21 und die Axialdichtlippe 22 dichten dynamisch ab. Das Hebelauge 23 wird durch ein Befestigungselement 24 in Form einer Mutter, die auf den Kugelzapfen 18 aufgeschraubt ist, in seiner Position gehalten.

Im eingebauten Zustand wird der Dichtungsbalg, bezogen auf seine herstellungsbedingte Form, die in Figur 1 gezeigt ist, in axialer Richtung gestaucht, sodass sich dadurch in dem hier gezeigten Ausführungsbeispiel eine im Wesentlichen kugelförmige Gestalt des Mantels 1 ergibt.

Davon abweichende Geometrien des Mantels 1, zum Beispiel ein faltenförmiger Mantel mit zwei Falten, sind ebenfalls möglich.

## Patentansprüche

1. Dichtungsbalg, umfassend einen Mantel (1) aus einem gummielastischen Werkstoff, der stirnseitig beiderseits jeweils einen Randbereich (2, 3) aufweist, wobei in zumindest einem der Randbereiche (2, 3) ein Spannring (4, 5) zur Befestigung des Dichtungsbalgs an einem Maschinenelement angeordnet ist, **dadurch gekennzeichnet, dass** der Spannring (4, 5) durch eine kreisringförmige Scheibe (6) mit elastisch veränderlichem Durchmesser gebildet ist, die selbstzentrierend und, in Umfangsrichtung (7) betrachtet, mäanderförmig ausgebildet ist.

2. Dichtungsbalg nach Anspruch 1, **dadurch gekennzeichnet, dass** der Spannring (4, 5) ohne chemische Bindung ausschließlich formschlüssig im jeweiligen Randbereich (2, 3) angeordnet ist.

3. Dichtungsbalg nach einem der Ansprüche 1 oder 2, **dadurch gekennzeichnet, dass** der Spannring (4, 5) aus einem zähharten Werkstoff besteht.

4. Dichtungsbalg nach einem der Ansprüche 1 bis 3, **dadurch gekennzeichnet, dass** der Spannring (4, 5) aus einem metallischen Werkstoff besteht.

5. Dichtungsbalg nach einem der Ansprüche 1 bis 4, **dadurch gekennzeichnet, dass** der Spannring (4, 5) in radialer Richtung (8) innenseitig erste Durchbrechungen (9) aufweist und in radialer Richtung (8) außenseitig zweite Durchbrechungen (10), dass die ersten Durchbrechungen (9) und die zweiten Durchbrechungen (10) jeweils einander, in Umfangsrichtung (7) betrachtet, mit Abstand benachbart zugeordnet sind und dass die ersten (9) und die zweiten Durchbrechungen (10) in einer gemeinsamen, gedachten Radialebene (11) angeordnet sind.

6. Dichtungsbalg nach Anspruch 5, **dadurch gekennzeichnet, dass** die ersten Durchbrechungen (9), in Umfangsrichtung (7) betrachtet, Haltekrallen (12) begrenzen, durch die der Dichtungsbalg am Maschinenelement befestigbar ist.

7. Dichtungsbalg nach einem der Ansprüche 5 oder 6, **dadurch gekennzeichnet, dass** die ersten Durchbrechungen (9) im Wesentlichen Ω-förmig ausgebildet sind und in radialer Richtung (8) innen erste Öffnungen (13) aufweisen.

8. Dichtungsbalg nach einem der Ansprüche 5 oder 6, **dadurch gekennzeichnet, dass** die zweiten Durchbrechungen (10) im Wesentlichen U-förmig ausgebildet sind und in radialer Richtung (8) außen zweite Öffnungen (14) aufweisen.

9. Dichtungsbalg nach einem der Ansprüche 7 oder 8, **dadurch gekennzeichnet, dass** die ersten (13) und die zweiten Öffnungen (14), in Umfangsrichtung (7) betrachtet, im Wesentlichen dieselbe Weite (15) aufweisen.

10. Dichtungsbalg nach einem der Ansprüche 5 bis 9, **dadurch gekennzeichnet, dass** die ersten (9) und die zweiten Durchbrechungen (10) jeweils eine im Wesentlichen gleiche radiale Tiefe (16) aufweisen.

## Claims

1. Seal bellows comprising a jacket (1) which is composed of a rubber-elastic material and which has an edge region (2, 3) at each of both face sides, wherein a clamping ring (4, 5) for fastening the seal bellows to a machine element is arranged in at least one of the edge regions (2, 3), **characterized in that** the clamping ring (4, 5) is formed by an annular disc (6) with an elastically variable diameter that is of self-centring and, as viewed in a circumferential direction (7), meandering form.

2. Seal bellows according to Claim 1, **characterized in that** the clamping ring (4, 5) is arranged exclusively in a form-fitting manner, without chemical bonding, in the respective edge region (4, 5) .

3. Seal bellows according to one of Claims 1 or 2, **characterized in that** the clamping ring (4, 5) consists of a tough, hard material.

4. Seal bellows according to one of Claims 1 to 3, **characterized in that** the clamping ring (4, 5) consists of a metallic material.

5. Seal bellows according to one of Claims 1 to 4, **characterized in that** the clamping ring (4, 5) has first apertures (9) at the inner side in a radial direction (8) and has second apertures (10) at the outer side in the radial direction (8), **in that** the first apertures (9) and the second apertures (10) are in each case assigned to one another in an adjacent and spaced-apart manner as viewed in the circumferential direction (7), and **in that** the first (9) and the second apertures (10) are arranged in a common imaginary radial plane (11).

6. Seal bellows according to Claim 5, **characterized in that**, as viewed in the circumferential direction (7), the first apertures (9) delimit retaining claws (12) by which the seal bellows can be fastened to the machine element.

7. Seal bellows according to one of Claims 5 or 6, **characterized in that** the first apertures (9) are of substantially Ω-shaped form and have first openings (13) at the inside in the radial direction (8) .

8. Seal bellows according to one of Claims 5 or 6, **characterized in that** the second apertures (9) are of substantially U-shaped form and have second openings (14) at the outside in the radial direction (8) .

9. Seal bellows according to one of Claims 7 or 8, **characterized in that**, as viewed in the circumferential direction (7), the first (13) and the second openings (14) have substantially the same width (15).

10. Seal bellows according to one of Claims 5 to 9, **characterized in that** the first (9) and the second apertures (10) have substantially the same radial depth (16) in each case.

## Revendications

1. Soufflet d'étanchéité, comprenant une enveloppe (1) en un matériau ayant l'élasticité du caoutchouc, qui comprend sur les deux côtés frontaux à chaque fois une zone de bord (2, 3), une bague de serrage (4, 5) pour la fixation du soufflet d'étanchéité à un élément de machine étant agencée dans au moins une des zones de bord (2, 3), **caractérisé en ce que** la bague de serrage (4, 5) est formée par un disque de forme annulaire (6) ayant un diamètre élastiquement variable, qui est configuré pour être autocentreur et, tel que vu dans la direction circonférentielle (7), en forme de méandres.

2. Soufflet d'étanchéité selon la revendication 1, **caractérisé en ce que** la bague de serrage (4, 5) est agencée dans la zone de bord respective (2, 3) exclusivement par complémentarité de forme, sans liaison chimique.

3. Soufflet d'étanchéité selon l'une quelconque des revendications 1 ou 2, **caractérisé en ce que** la bague de serrage (4, 5) est constituée d'un matériau dur tenace.

4. Soufflet d'étanchéité selon l'une quelconque des revendications 1 à 3, **caractérisé en ce que** la bague de serrage (4, 5) est constituée d'un matériau métallique.

5. Soufflet d'étanchéité selon l'une quelconque des revendications 1 à 4, **caractérisé en ce que** la bague de serrage (4, 5) comprend des premières découpures (9) sur le côté intérieur dans la direction radiale (8) et des deuxièmes découpures (10) sur le côté extérieur dans la direction radiale (8), **en ce que** les premières découpures (9) et les deuxièmes découpures (10) sont à chaque fois associées les unes aux autres en position voisine à une distance, telles que vues dans la direction circonférentielle (7), et **en ce que** les premières (9) et les deuxièmes découpures (10) sont agencées dans un plan radial imaginaire commun (11).

6. Soufflet d'étanchéité selon la revendication 5, **caractérisé en ce que** les premières découpures (9), telles que vues dans la direction circonférentielle (7), délimitent des griffes de retenue (12), par lesquelles le soufflet d'étanchéité peut être fixé à l'élément de machine.

7. Soufflet d'étanchéité selon l'une quelconque des revendications 5 ou 6, **caractérisé en ce que** les premières découpures (9) sont configurées essentiellement en forme d'Q et comprennent des premières ouvertures (13) intérieures dans la direction radiale (8).

8. Soufflet d'étanchéité selon l'une quelconque des revendications 5 ou 6, **caractérisé en ce que** les deuxièmes découpures (10) sont configurées essentiellement en forme de U et comprennent des deuxièmes ouvertures (14) extérieures dans la direction radiale (8).

9. Soufflet d'étanchéité selon l'une quelconque des revendications 7 ou 8, **caractérisé en ce que** les premières (13) et les deuxièmes ouvertures (14), telles que vues dans la direction circonférentielle (7), présentent essentiellement la même largeur (15).

10. Soufflet d'étanchéité selon l'une quelconque des revendications 5 à 9, **caractérisé en ce que** les premières (9) et les deuxièmes découpures (10) présentent à chaque fois une profondeur radiale (16) essentiellement identique.
